# EUROPÄISCHE PATENTSCHRIFT

(11) **EP 3 402 435 B1**
(45) Veröffentlichungstag und Bekanntmachung des Hinweises auf die Patenterteilung: **30.10.2019**
(21) Anmeldenummer: 17700335.7
(22) Anmeldetag: 12.01.2017
(51) Int. Cl.: A61C 5/62, A61C 5/66

(54) **MIKRO-APPLIKATOR MIT APPLIKATIONSBEREICH IN DEM KAPSELN ANGEORDNET SIND, INSBESONDERE ZUR VERWENDUNG MIT DENTALEN ADHÄSIVEN**
MICRO APPLICATOR WITH APPLICATION REGION, IN WHICH CAPSULES ARE ARRANGED, IN PARTICULAR FOR USE WITH DENTAL ADHESIVES
MICRO-APPLICATEUR PRÉSENTANT UNE ZONE D'APPLICATION DANS LAQUELLE SE TROUVENT DES CAPSULES, DESTINÉ NOTAMMENT À L'UTILISATION AVEC DES ADHÉSIFS DENTAIRES

(30) Priorität: 13.01.2016 DE 102016100517
(43) Veröffentlichungstag der Anmeldung: 21.11.2018
(73) Patentinhaber: Kulzer GmbH, 63450 Hanau (DE)
(72) Erfinder: SUFFEL, Ralf, 58239 Schwerte (DE); KASTRATI, Astrit, 61206 Wöllstadt (DE)
(74) Vertreter: Bendele, Tanja
(86) Internationale Anmeldenummer: PCT/EP2017/050532
(87) Internationale Veröffentlichungsnummer: WO 2017/121780

(56) Entgegenhaltungen:
- WO-A2-00/10477
- JP-B2- 5 354 644

## Beschreibung

Die Erfindung betrifft einen dentalen Mikro-Applikator mit einem Körper mit einem distalen und einem proximalen Bereich und mit einem Applikationsbereich im proximalen Bereich, wobei der Körper im proximalen Bereich mindestens eine Verzweigung oder mindestens ein Filament aufweist, wodurch eine Verästelung am Körper im proximalen Bereich gebildet wird, die den Applikationsbereich darstellt, und wobei dem Applikationsbereich mindestens eine hohle, geschlossene Kapsel, insbesondere eine Vielzahl an Kapseln zugeordnet sind. Ferner betrifft die Erfindung ein Kit umfassend den Applikator, wobei in den Kapseln ein dentales Adhäsiv enthalten ist.

Zur Verbesserung der Haftung dentaler Materialien an Zähnen, sind vielfältige Bondings und Primer Kombinationen bekannt. Die Haftmittel der jüngeren Generation umfassen einkomponentige, selbstätzende Haftmittel. Um eine gute Haftung auf den Zahn zu gewährleisten muss eine große, gut benetzbare Haftfläche bereitgestellt werden. Das Adhäsiv selbst muss dünnflüssig sein, gute benetzende Eigenschaften aufweisen und sehr schnell aushärten, um die Möglichkeit eines Kontaktes mit Feuchtigkeit, mit der Folge einer verminderten Haftung, zu minimieren.

So sind selbstätzende Adhäsive bekannt, die die Schritte der Säureätzung und des anschließenden Applizierens des Adhäsivs, in einem Schritt zusammenfassen. Das säurehaltige Adhäsivsystem löst die Schmierschicht auf und legt das darunterliegende Dentin frei oder löst die Schmierschicht lediglich an, um diese permeabel für Inhaltsstoffe des Adhäsivs zu machen. Simultan erfolgt eine Infiltration der Monomere in die Zahnhartsubstanz. Im Falle des Schmelzes wird durch die säurehaltigen Adhäsivsysteme ein der Phosphorsäureätzung ähnliches Ätzmuster erzeugt. Das zur Infiltration notwendige Lösungsmittel wird mit einem Luftpüster entfernt und das Adhäsiv wird gehärtet, bspw. strahlengehärtet. Analog werden Desensibilisierugsmittel auf dem Zahn oder in Zahnkavitäten angewendet.

Des Weiteren sind Einkomponenten-Applikatoren bekannt, die im Körper des Applikators ein Reservoir aufweisen, das durchgängig bis zum Applikationsmittel am proximalen Ende des Körpers reicht, wie in der US6059570 oder US6585511B2. Alternative Applikatoren offenbart die WO2004/087002A1 an dessen distalem Ende ein Reservoir vorgesehen ist, das eine Flüssigkeit enthält. Dieses Reservoir wird abgebrochen und das proximale Ende des Applikators mit dem Applikationsmittel kann für die Applikation der Flüssigkeit in das Reservoir eingetaucht werden. US7040893B2 offenbart ebenfalls Applikatoren mit einem Reservoir und einem Austragskanal, die miteinander kommunizieren und ein gemeinsames Lumen bilden. DE102004022046A1 offenbart ebenfalls eine Einzeldosis-Verpackung umfassend ein Reservoir, das mit dem Austragskanal kommuniziert, indem es einen Lumen bildet. Allein durch Drücken des Behälters wird die Flüssigkeit aus dem Reservoir ausgetragen. Nachteilig an den genannten Applikatoren des Standes der Technik, ist, dass das Reservoir direkt mit dem Austragskanal kommuniziert und so die Flüssigkeit unbeabsichtigt aus dem Applikator austreten kann oder in der Flüssigkeit enthaltende volatile Lösemittel entweichen können, sofern die Applikatorspitze nicht separat mit einem Verschluss abgedichtet wird.

DE102007058924B4 offenbart einen Applikator mit einem separaten Reservoir in dem die zu applizierende Flüssigkeit enthalten ist. EP1336386A1 offenbart eine Single-Dose Verpackung für Flüssigkeiten mit einer Karte mit einer Sollknicklinie, einem Flüssigkeitsbehälter an der Unterseite im Bereich der Sollknicklinie sowie einem an der Karte angebrachten Applikator, der durch das Knicken in die Flüssigkeit eingetaucht wird. Auch US20030168358A1 offenbart eine knickbare Karte, die in einem Reservoir die dentale Flüssigkeit enthält sowie einen separaten Applikator. Allen Applikatoren gemeinsam ist, dass zur Aktivierung des Applikators der Einsatz beider Hände notwendig ist, um die Verschlusskappe zu entfernen oder ein Reservoir oder einen Deckel eines Reservoirs abzubrechen und aufzustellen. DE102011009187A1 offenbart einen einhändig bedienbaren Applikator umfassend ein Reservoir, das durch eine Folie vom Austragskanal getrennt ist. Diese Folie kann mit einem Dorn durch axiales Zusammenschieben des Applikators durchstoßen werden.

WO 00/10477 offenbart einen Applikator für dentale Materialien mit einer mit Fasern versehenen Kugeloberfläche an einer Ausbringspitze.

Es besteht ein Bedarf an Applikatoren, die mit einer Hand aktiviert werden können und direkt einsatzbereit sind. Daher bestand die Aufgabe der vorliegenden Erfindung darin, einen Applikator zu entwickeln, der einhändig direkt verwendet werden kann.

Gelöst wird die Aufgabe mit einem dentalen Mikro-Applikator nach Anspruch 1 sowie einem Kit nach Anspruch 9.

Gegenstand der Erfindung ist ein dentaler Mikro-Applikator nach Anspruch 1.

Die Kapseln des erfindungsgemäßen Applikators im Applikationsbereich sind unter Einwirkung einer äußeren Kraft oder bei Kontakt mit einer Oberfläche zerstörbar. Die Kapseln sind vorzugsweise durch stoßartig einwirkenden äußeren Druck oder eine definierten Mindestdruck zerstörbar.

Ferner kann die mindestens eine Kapsel aus einem elastischen oder spröden Material gebildet sein, insbesondere aus Polyamid. Die Filamente können ebenfalls aus Polyamid hergestellt sein.

Erfindungsgemäß liegt im Applikationsbereich eine Vielzahl an Kapseln vor, die an den Filamenten und/oder im proximalen Bereich des Körpers mit Verzweigungen angeordnet sind. Nach einer bevorzugten Ausführungsform sind die Kapseln im Applikationsbereich an die Filamente und/oder an den Körper mit Verzweigungen angeklebt. In alternativen Ausführungsformen kann der Körper des Applikators i) ein massiver Körper sein oder ii) der Körper kann mindestens einen Kanal aufweisen, der in die hohle, geschlossene mindestens eine Kapsel führt, insbesondere führt in jede Kapsel ein Kanal, so dass die Kanäle mit dem Hohlraum in jeder Kapsel kommunizieren.

Ebenso ist Gegenstand der Erfindung ein Applikator in dem mindestens eine Kapsel, vorzugsweise jede Kapsel, mit einer dentalen Flüssigkeit gefüllt ist, insbesondere mit einem dentalen Adhäsiv, vorzugsweise mit einem selbstätzenden dentalen Adhäsiv, wie iBOND® Self Etch.

Ebenso Gegenstand der Erfindung ist die nichttherapeutische Verwendung eines erfindungsgemäßen Applikators zur Applikation von dentalen Flüssigkeiten, wie insbesondere iBOND® Self Etch auf Zähnen.

Nach einer Ausführungsvariante ist Gegenstand der Erfindung ein Kit umfassend mindestens einen Applikator, wobei jeder Applikator einzeln in einer lichtundurchlässigen Verpackung bevorratet ist.

Nach einer bevorzugten Ausführungsform liegt jeder Applikator im Kit in einer lichtundurchlässigen Box mit einem zum Öffnen der Box verschiebbaren Deckel oder einer herausschiebbaren Schublade. Der verschiebbare Deckel oder die Schublade sind rastbar ausgebildet, um die Öffnung der Box, um jeweils einen in der Box liegenden Applikator einstellen zu können. Dabei sind die Applikatoren vorzugsweise in der Box voneinander separiert, beispielsweise durch eine Trennwand. Des Weiteren ist es bevorzugt, wenn die Applikatoren in der Box oder in der Schublade festgelegt sind, um ein unbeabsichtigtes Zerreißen der Kapseln zu unterbinden. Der Applikator ist dabei insbesondere so in der Verpackung fixiert, dass die Kapseln des Applikators die Verpackung oder Bestandteile davon nicht berührt. Ebenfalls Gegenstand der Erfindung ist daher ein Kit indem die Applikatoren sowie deren Kapseln in der Verpackung derart fixiert sind, dass sie keine Verpackungsbestandteile berühren oder gedämpft fixiert sind, dass die Kapseln während des Transportes oder der Lagerung nicht zerstört werden.

Der Körper des Applikators kann vorzugsweise aus einem inerten Polymer ist, insbesondere einem thermoplastischen Polymer hergestellt sein, umfassend Cyclo-Olefin-Polymeren (COP), PE, PP, HDPE, LDPE, poröses expandiertes Polypropylen (PEPP) und/oder expandiertes Polypropylen (EPP). Die Kapseln und/oder die Filamente oder der Körper mit Verzweigungen, können vorzugsweise aus Polyamid hergestellt sein.

In Alternativen kann es vorstellbar sein, dass zusätzlich zu den Kapseln im Applikationsbereich mindestens eine Bürste, Schwamm, Beflockung, Kamm, Knäul, Pinsel, Spatel, Mischpad und/oder poröses Mittel angeordnet ist.

Nachfolgend wird die Erfindung anhand von Beispielen näher erläutert, ohne sie auf die Beispiele zu beschränken:

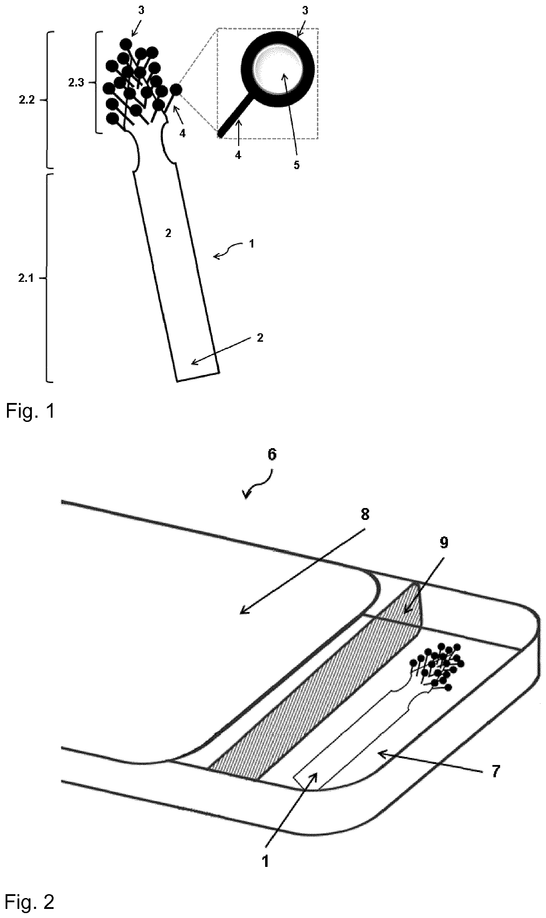

**Figur 1** stellt dar einen dentalen Mikro-Applikator **1** mit einem Körper **2** mit einem distalen **2.1** und einem proximalen Bereich **2.2** und mit einem Applikationsbereich **2.3** im proximalen Bereich. Der Körper weist im proximalen Bereich **2.2** mindestens eine Verzweigung **4,** hier eine Vielzahl an Filamenten **4** auf, wodurch eine Verästelung am Körper **2** im proximalen Bereich **2.2** gebildet wird, die den Applikationsbereich **2.3** darstellt. Im Applikationsbereich **2.3** ist eine Vielzahl von hohlen, geschlossenen Kapseln **3** den Filamenten **4** zugeordnet. Die Kapseln weisen einen Hohlraum **5** auf, der zumindest teilweise mit einer dentalen Flüssigkeit gefüllt ist. Die Herstellung der Kapseln kann beispielsweise in einer Emulsionspolymersiation erfolgen. Die Kapseln müssen nicht notwendigerweise vereinzelt vorliegen, sondern können auch herstellbedingt agglomeriert und/oder aggregiert vorliegen. Die Kapseln sind unter Einwirkung einer äußeren Kraft oder bei Kontakt mit einer Oberfläche zerstörbar. Bei einer typischen Anwendung entnimmt der Anwender einen Applikator der Box und drückt den Applikator mit dem Applikationsbereich in dem sich die Kapseln befinden auf die zu behandelnde Stelle im Zahn und betupft bzw. reibt den Applikator über die Zahnoberfläche, wobei die Kapseln zerstört werden und diese die dentale Flüssigkeit entlassen. Die Kapseln des Applikators funktionieren analog dem Brennnesselprinzip.
**Figur 2** zeigt eine Box **6** mit einem verschiebbaren Deckel **8** wobei in dem unteren Bereich **7** der Box **8** eine Trennwand **9** angeordnet ist, durch die die Applikatoren voneinander separiert werden. Jeder Applikator kann von einem Clip (nicht dargestellt) in seiner Position fixiert werden.

## Patentansprüche

1. Dentaler Mikro-Applikator (1) mit einem Körper (2) mit einem distalen (2.1) und einem proximalen Bereich (2.2) und mit einem Applikationsbereich (2.3) im proximalen Bereich, wobei
der Körper (2) im proximalen Bereich (2.2) mindestens eine Verzweigung (4) oder eine Vielzahl an Filamenten (4) aufweist, wodurch eine Verästelung am Körper (2) im proximalen Bereich (2.2) gebildet wird, die den Applikationsbereich (2.3) darstellt, und wobei dem Applikationsbereich (2.3) mindestens eine hohle, geschlossene Kapsel (3) zugeordnet ist, **dadurch gekennzeichnet, dass**
im Applikationsbereich (2.3) eine Vielzahl an Kapseln (3) vorliegt, die an den Filamenten (4) und/oder im proximalen Bereich (2.2) des Körpers mit Verzweigungen (4) angeordnet sind.

2. Applikator nach Anspruch 1, **dadurch gekennzeichnet, dass** die mindestens eine Kapsel (3) aus einem elastischen oder spröden Material ist.

3. Applikator nach einem der Ansprüche 1 bis 2, **dadurch gekennzeichnet, dass** i) der Körper (2) ein massiver Körper ist oder ii) der Körper mindestens einen Kanal (5) aufweist, der in die mindestens eine hohle, geschlossene Kapsel (3) führt und mit dem Hohlraum in der Kapsel kommuniziert.

4. Applikator nach einem der Ansprüche 1 bis 3, **dadurch gekennzeichnet, dass** die mindestens eine Kapsel (3) mit einer dentalen Flüssigkeit gefüllt ist, insbesondere mit einem dentalen Adhäsiv, vorzugsweise mit einem selbstätzenden dentalen Adhäsiv.

5. Applikator nach einem der Ansprüche 1 bis 4, **dadurch gekennzeichnet, dass** eine Vielzahl an Kapseln (3) im Applikationsbereich (2.3) an die Filamente (4) und/oder an den Körper mit Verzweigungen (4) angeklebt sind.

6. Applikator nach einem der Ansprüche 1 bis 5, **dadurch gekennzeichnet, dass** die mindestens eine Kapsel (3) bis Vielzahl an Kapseln (3) im Applikationsbereich (2.3), unter Einwirkung einer äußeren Kraft oder bei Kontakt mit einer Oberfläche, zerstörbar sind.

7. Nichttherapeutische Verwendung eines Applikators (1) nach einem der Ansprüche 1 bis 6, zur Applikation von dentalen Flüssigkeiten, insbesondere eines dentalen Adhäsivs.

8. Kit umfassend mindestens einen Applikator (1) nach einem der Ansprüche 1 bis 6, **dadurch gekennzeichnet, dass** jeder Applikator (1) einzeln in einer lichtundurchlässigen Verpackung bevorratet ist.

9. Kit nach Anspruch 8, **dadurch gekennzeichnet, dass** jeder Applikator (1) in einer lichtundurchlässigen Box mit einem zum Öffnen der Box verschiebbaren Deckel oder einer verschiebbaren Schublade vorliegt.

10. Kit nach Anspruch 9, wobei die Applikatoren in der Verpackung fixiert sind, so dass die Kapseln die Verpackung oder Verpackungsbestandteile nicht berühren oder die Applikatoren und/oder die Kapseln gedämpft fixiert sind.

## Claims

1. Dental micro-applicator (1) having a body (2) having a distal (2.1) and a proximal region (2.2) and having an application area (2.3) in the proximal region,
the body (2) having at least one branching (4) or a plurality of filaments (4) in the proximal region (2.2), by means of which a ramification representing the application area (2.3) is being formed at the body (2) in the proximal region (2.2), and at least one hollow closed capsule (3) being assigned to the application area (2.3), **characterised in that** a plurality of capsules (3) is present in the application area (2.3) being arranged at the filaments (4) and/or in the proximal region (2.2) of the body having branchings (4).

2. Applicator according to claim 1, **characterised in that** the at least one capsule (3) is made of an elastic or brittle material.

3. Applicator according to any one of the claims 1 to 2, **characterised in that** i) the body (2) is a massive body or ii) the body has at least one channel (5) running into the at least one hollow closed capsule (3) und communicates with the cavity in the capsule.

4. Applicator according to any one of the claims 1 to 3, **characterised in that** the at least one capsule (3) is filled with a dental liquid, in particular with a dental adhesive, preferably with a self-etching dental adhesive.

5. Applicator according to any one of the claims 1 to 4, **characterised in that** a plurality of capsules (3) is glued on the filaments (4) and/or on the body having branchings (4) in the application area (2.3).

6. Applicator according to any one of the claim 1 to 5, **characterised in that** the at least one capsule (3) to plurality of capsules (3) in the application area (2.3) is destructible under the influence of an external force or upon contact with a surface.

7. Non-therapeutic use of an applicator (1) according to any one of the claims 1 to 6, for application of dental liquids, in particular a dental adhesive.

8. Kit comprising at least one applicator (1) according to any one of the claims 1 to 6, **characterised in that** each applicator (1) is individually stored in a lightproof packing.

9. Kit according to claim 8, **characterised in that** each applicator (1) is present in a lightproof box having a lid being slidable to open the box, or in a slidable drawer.

10. Kit according to claim 9, wherein the applicators are fixed in the packing so that the capsules do not touch the packing or packing parts, or the applicators and/or the capsules are attenuatedly fixed.

## Revendications

1. Micro-applicateur dentaire (1) ayant un corps (2) ayant une région distale (2.1) et proximale (2.2) et ayant un domaine d'application (2.3) dans la région proximale,
le corps (2) ayant au moins un branchement (4) ou une pluralité des filaments (4) dans la région proximale (2.2), au moyen duquel/desquels une ramification représentant le domaine d'application (2.3) est formée au corps (2) dans la région proximale (2.2), et au moins une capsule fermée creuse (2) étant assignée au domaine d'application (2.3), **caractérisé en ce qu'**
une pluralité des capsules (3) est présente dans le domaine d'application (2.3) étant disposée aux filaments (4) et/ou dans la région proximale (2.2) du corps ayant des branchements (4).

2. Applicateur selon la revendication 1, **caractérisé en ce que** l'au moins une capsule (3) est faite d'un matériau élastique ou cassant.

3. Applicateur selon l'une des revendications 1 à 2, **caractérisé en ce que** i) le corps (2) est un corps massif ou ii) le corps a au moins un canal (5) conduisant dans l'au moins une capsule fermée creuse (3) et communique avec la cavité dans la capsule.

4. Applicateur selon l'une des revendications 1 à 3, **caractérisé en ce que** l'au moins une capsule est remplie d'un liquide dentaire, en particulière d'un adhésif dentaire, de préférence d'un adhésif dentaire auto-mordançant.

5. Applicateur selon l'une des revendications 1 à 4, **caractérisé en ce qu'**une pluralité des capsules (3) est collée sur les filaments (4) et/ou sur le corps ayant des branchements (4) dans le domaine d'application (2.3).

6. Applicateur selon l'une des revendications 1 à 5, **caractérisé en ce que** l'au moins une capsule (3) à la pluralité des capsules (3) dans le domaine d'application (2.3) est destructible sous l'influence d'une force externe ou en contact avec une surface.

7. Utilisation non thérapeutique d'un applicateur (1) selon l'une des revendications 1 à 6, pour l'application des liquides dentaires, en particulière d'un adhésif dentaire.

8. Kit comprenant au moins un applicateur (1) selon l'une des revendications 1 à 6, **caractérisé en ce que** chaque applicateur (1) est individuellement stocké dans un emballage imperméable à la lumière.

9. Kit selon la revendication 8, **caractérisé en ce que** chaque applicateur (1) est présent dans une boîte imperméable à la lumière ayant un bouchon étant coulissable pour ouvrir la boîte, ou dans un tiroir coulissable.

10. Kit selon la revendication 9, selon lequel les applicateurs sont fixés dans l'emballage de sorte que les capsules ne touchent pas l'emballage ou parts d'emballage, ou les applicateurs et/ou les capsules sont atténuement fixées.
